# EUROPEAN PATENT SPECIFICATION

(11) **EP 0 721 380 B1**
(45) Date of publication and mention of the grant of the patent: **26.05.1999**
(21) Application number: 94927773.5
(22) Date of filing: 29.09.1994
(51) Int. Cl.: B05D 1/20

(54) **PROTEIN THIN FILMS AND COMPOSITIONS FOR USE IN THEIR PREPARATION**
DUENNE PROTEINSCHICHTEN UND ZUSAMMENSETZUNGEN ZU IHRER HERSTELLUNG
COUCHES MINCES PROTEINIQUES ET COMPOSITIONS DESTINEES A LEUR PREPARATION

(30) Priority: 29.09.1993 IT RM930659; 26.11.1993 GB 9324327; 25.07.1994 IT RM940484
(43) Date of publication of application: 17.07.1996
(73) Proprietor: TECHNOBIOCHIP, 57030 Marciana (IT)
(72) Inventor: VAKULA, Sergei, I-16153 Genova Sestri Ponente (IT); EROKHIN, Victor, I-16016 Cogoleto (IT); NICOLINI, Claudio, I-16027 Pieve Ligure (IT); FACCI, Paolo, I-16125 Genova (IT); ANTOLINI, Francesco, I-06100 Perugia (IT)
(74) Representative: de Simone, Domenico
(86) International application number: IB9400307
(87) International publication number: WO9509058

(56) References cited:
- EP-A- 0 274 824
- WO-A-86/02264
- WO-A-90/03164
- WO-A-91/14454
- WO-A-92/18147
- WO-A-93/02664
- ANGEWANDTE CHEMIE. INTERNATIONAL EDITION, vol. 24, June 1985 WEINHEIM DE, pages 439-450, P.L. LUISI 'Enzymes hosted in reverse micelles in hydrocarbon solution'
- THIN SOLID FILMS, vol. 176, no. 1, 1 September 1989 pages 151-156, XP 000087272 ZHU D G ET AL 'ON THE FORMATION OF LANGMUIR-BLODGETT FILMS CONTAINING ENZYMES'
- THIN SOLID FILMS, vol. 160, no. 1 + INDEX, 1 June 1988 pages 463-469, XP 000096863 SRIYUDTHSAK M ET AL 'ENZYME-IMMOBILIZED LANGMUIR-BLODGETT FILM FOR A BIOSENSOR'
- EXT. ABSTR. PROGRAM - BIENN. CONF. CARBON , vol. 13, 1977 pages 85-86, NYIALS E. ET AL. 'ADSORBTIVE PROPERTIES OF GAMMA-GLOBULIN ON PURE AND SILICON ALLOYED LTI-CARBONS'
- THE JOURNAL OF BIOLOGICAL CHEMISTRY, vol. 260, no. 2, 25 January 1985 pages 1032-1039, SHEN B.W. 'LIPID-PROTEIN INTERACTION AT SOLID-WATER INTERFACE.ADSORBTION OF HUMAN APO-HIGH DENSITY LIPOPROTEIN TO AMPHIPHILIC INTERFACES'
- TRANSACTIONS OF AMERICAN SOCIETY FOR ARTIFICIAL INTERNAL ORGANS, vol. 20B, 1974 BOCA RATON, FLORIDA US, pages 480-490, 'THERMODDYNAMICS OF NATIVE PROTEIN/FOREIGN SURFACE INTERACTIONS I. CALORIMETRY OF THE HUMAN GAMMA-GLOBULIN /GLASS SYSTEM'
- HISTOCHEMISTRY, vol. 80, no. 1, January 1984 pages 13-18, HORISBERGER M. ET AL. 'LABELLING OF COLLOIDAL GOLD WITH PROTEIN. A QUANTITATIVE STUDY USING BETA- LACTOGLOBULIN'
- THIN SOLID FILMS, vol. 238, no. 1, 15 January 1994 LAUSANNE CH, pages 88-94, XP 000426861 S. VAKULA ET AL. 'Reversed micellar approach as a new tool for the formation and structural studies of protein of protein Langmuir-Blodgett films'
- BIOCHEMICA ET BIOPHYSICA ACTA , vol. 1158, no. 3, 27 November 1993 pages 273-278, C. NICOLINI 'Thermal stability of protein secondary structure in Langmuir - Blodgett films'
- BIOCHEMICA ET BIOPHYSICA ACTA, vol. 225, 1971 AMSTERDAM, pages 382-387, P.FROMHERZ 'A new technique for investigating lipid protein films'
- THIN SOLID FILMS, vol. 178, no. 1, 1 November 1989 pages 183-189, XP 000099391 TAKESHI KASUGA ET AL 'DESIGN OF A NEW LANGMUIR-BLODGETT TROUGH WITH THE ZONE-HEATING MECHANISM ABOVE THE WATER SURFACE'
- THIN SOLID FILMS, vol. 202, no. 1, 15 July 1991 pages 151-156, XP 000275109 TOHRU NAKAGAWA ET AL 'NEW METHOD FOR FABRICATING LANGMUIR-BLODGETT FILMS OF WATER-SOLUBLE PROTEINS WITH RETAINED ENZYME ACTIVITY'
- THIN SOLID FILMS, vol. 210 / 211, no. 1 / 02, 15 April 1992 pages 98-100, XP 000360073 MASATSUGU SHIMOMURA ET AL 'EFFECT OF THERMAL TREATMENT ON CRYSTAL GROWTH OF THE SURFACE MONOLAYER'
- THIN SOLID FILMS, vol. 216, no. 1, 28 August 1992 pages 99-104, XP 000327794 SASABE H ET AL 'TWO-DIMENSIONAL MOLECULAR PACKING OF PROTEINS'
- JOURNAL OF THE AMERICAN CHEMICAL SOCIETY, vol. 114, 1992 pages 9298-9299, P.S. STAYTON ET AL. 'Genetic engineering of surface attachment sites yields oriented protein monolayers'
- LANGMUIR, vol. 9, no. 1, January 1993 pages 136-140, B. FISCHER ET AL. 'Antigen binding to a pattern of lipid-anchored antibody binding sites measured by surface plasmon microscopy'
- JOURNAL OF PHYSICAL CHEMISTRY, vol. 94, no. 12, 1990 pages 5073-5078, S-P. HEYN ET AL. 'Lipid and lipid-protein monolayers spread from a vesicle suspension: A microfluorescence film balance study'
- BIOPHYSICAL JOURNAL, vol. 57, no. 3, March 1990 pages 669-673, M.EGGER ET AL. 'TWO-DIMENSIONAL RECOGNITION PATTERN OF LIPID-ANCHORED FAB'FRAGMENTS'

## Description

### Field of the Invention

This invention relates to protein thin films and compositions for use in their preparation. The invention also relates to a new general procedure for thermal stabilization of protein thin films. Additionally the invention relates to a method for preparing protein thin films on non-planar substrates and can provide particles carrying a protein thin film. Also the invention relates to ordered protein thin films obtained by means of chemical functionalization and site-specific mutagenesis.

### Introduction

The ideas of bioelectronics, presently widely discussed, require the utilization of very thin regular protein layers organized in three-dimensionally ordered structures with passive molecular supports (conductive layers, insulators). One of the most promising ways is to apply the Langmuir-Blodgett (LB) technique. At present it seems to be the best procedure that allows to construct functional structures with molecular resolution. Due to its relatively mild process conditions, the technique was successfully applied to the fabrication of films of several proteins.

It was found that the LB method may be applied in a classic way when working with membrane proteins, such as photosynthetic reaction centres and bacterirhodopsin. It is also possible to utilize it for some of the water-soluble proteins which are stable at the air/water interface. Immunoglobulin G is one of the examples of such kind of proteins⁶. However, water-soluble proteins, the structure of which is maintained only by polar and hydrophobic interactions, tend to denature at the air/water interface. The forces that sustain intact the structure of such proteins are of the same order of magnitude as the surface tension, thus, after such a protein is placed onto the water surface, the action of the surface tension unfolds the protein by disrupting the existing intramolecular interactions. (With the exception of immunoglobulins, which are stabilized by covalent S-S bonds within the molecule. These bonds are much stronger than the surface tension which preserves the molecular structure from denaturation).

Since many of the water-soluble proteins have significant functional interest for many fields of natural science (for example, cytochromes - promising objects for bioelectronics), a search for the ways of applying the LB method to these proteins has been initiated. The activities were done mainly in two directions, namely the utilization of charge and specific interactions. In both cases a monolayer of lipid was formed at the air/water interface. In the former case, the heads of lipid molecules were charged oppositely to the protein surface, and in the latter case the lipid head groups had a specific affinity to some regions of the protein molecules. The protein molecules, once injected under the monolayer, were regularly adsorbed at the lipid head groups.

As a result, formation of 2D crystalline protein domains was observed. However, the techniques used up to now have also certain disadvantages. One of the most important facts is that, during adsorption at the lipid/water interface, a non-homogeneous distribution of protein in the film was created, a fact that has been observed by fluorescence microscopy⁹. Besides regular protein crystal domains, some irregularities, like empty regions without protein molecules, have been observed. Another disadvantage is that not all of the protein molecules are bound to the lipid head groups due to simple solubility of the protein in the aqueous phase and, hence, redistribution of a major part of protein molecules into the bulk solution.

According to one aspect of the present invention reverse micelles of protein can be used to prepare homogeneous thin films that are free of the disadvantages described above. The present invention provides protein-containing micelles and homogeneous thin films and a method for their preparation.

Reversed micelles of AOT with cytochrome C were used as spreading solution for the Langmuir-Blodgett film formation. A condensed monolayer with closely packed surfactant molecules in the air and closely packed protein molecules under the water surface was formed after several repetitions of the compression-expansion cycle. The resulting film was transferred onto the solid substrate. The films were studied by circular dichroism and by small-angle X-ray scattering. It was found that the metalloprotein in the film is not denatured and the resulting thin film is significantly ordered, comparatively more than the corresponding monocomponent protein Langmuir-Blodgett films.

The behaviour of several classes of protein Langmuir-Blodgett films subjected to thermal treatment has been investigated by several biophysical and biochemical techniques and general conclusions on this subject have been drawn. Langmuir-Blodgett film formation of different classes of proteins results in the striking improvement of thermal stability both from the structural and functional point of view. Secondary and tertiary structure of proteins in LB films was found to be not affected by heating until at least 200°C. The functional properties of different polypeptide systems have been analyzed and were also surprisingly preserved to temperature quite higher than in solution. Thermal stability of the protein function was strongly dependent upon the type of the protein, but even in the worst case the functional properties were not affected up to the temperature 40°C higher than in not oriented samples, either in solution or in dried smear. Thermal stability was found to be a general phenomenon for proteins ordered in Langmuir-Blodgett film.

This stability appears to be the result of the close packing and of the decrease in conformational entropy which allows protein recrystallization after thermal treatment.

Thus according to another aspect of the invention there is provided a method to produce a stabilised thin protein film having higher thermal stability compared to a non-oriented protein sample, the method comprising orienting the protein molecules in a Langmuir-Blodgett film. The film produced exhibits increased stability after thermal treatment. Thermal treatment can also lead to an increase in activity of the protein in the thin film.

To date, protein thin films have been applied to planar substrates by the LB technique. According to another aspect of the invention a LB protein thin film may be formed on non planar substrates such as microparticles. This may have the advantage of providing a comparatively larger surface area covered by the protein thin film per unit volume.

The formation of composite films of lipids and proteins in which the interaction between these two types of molecules is specific has been studied. The specificity of the reaction between the lipid and the protein causes the latter to be oriented in some way with respect to the film formed by the lipid. According to yet a further aspect of the invention the lipid head group is rendered reactive towards only one amino acid residue, thus obtaining a lipid "anchorable" to any protein having such type of amino acid. Knowing the three-dimensional structure of the protein at atomic resolution (from NMR or X-ray data), which can be visualized by means of molecular graphics software, it is also possible to mutate specifically the external surface of the protein to obtain the anchoring in the required position. The binding reaction between the protein and the "ad hoc" synthetized lipid is carried out in the air/water interface by means of Langmuir-Blodgett (LB) technique. Therefore, with this technique it is possible to order the lipid film at the air/water interface inducing the correct orientation of the protein in the 2D film, avoiding also denaturation. The obtained film can be deposited and characterized by means of spectrophotometry, CD and small angle X-ray diffraction. The procedure is exemplified for some metalloproteins such a cytochrome C, azurin and cytochrome P450 scc. For cytochrome C and azurin the chosen amino acid which is to be functionalized is the arginine residue since only one such residue is present on the external surface. The cytochrome P450 scc, having numerous arginine residues on the surface, had to be subjected to site-specific mutagenesis in order to leave only one such amino acid in the desired position. The arginine was chosen as amino acid to be modified since from the literature data it is known that this amino acid can be modified using the α-diketon 2,3-butanedione. The lipid indicated for the head functionalization must have the head group modified with diketonic group.

### Use of Reverse Micelles of Protein to Produce Homogeneous Thin Films

This aspect of the present invention is particularly suitable for use with protein of the type that is unstable at a water/air interface. Many such proteins are known. Illustrative examples are glucose oxidase, cytochrome C and other metalloproteins.

Similarly, lipids and organic solvents that can be used to form the reverse micelles are known. Examples are given below. On its introduction into the lipid micellar particles, the protein is in the middle of the particle (in a contact with the lipid head groups) and hydrocarbon chains are exposed outside. Such particles may be dissolved in organic solvents and the LB technique in the classic version (i.e. spreading of organic solution, compression and transfer) may be applied. Experiments have shown that it was thus possible to deposit enzyme molecules and that the enzyme did not lose its activity in the LB film. However, in order to obtain dense packing of the proteins, and to avoid the area covered by the lipids being larger than the area covered by the protein molecules, it is preferred that the organic chain of the lipid should be relatively short, e.g. up to 12 C atoms (but depending to some extent on the relative sizes of the components).

THIN SOLID FILMS, Vol. 178 (1989) pages 183-189, "Design of a new Langmuir-Blodgett through with the zone-heating mechanism above the water surface" describes a new LB trough where the zone-heat-treatment apparatus lies above a moving-wall-type LB trough. The zone heater can heat the monolayer on the subphase within a distance of 1 mm. and can move slowly towards both the substrate and the barrier. A Y-type multilayer is formed on the subphase using zone heat treatment and the number of layer on the water surface depends on the surface pressure. When the pressure decreases at the same applied temperature, the number of layer decreases.

Specific subject matter of this invention is a uniform protein thin film comprising a monolayer of oriented protein molecules on a solid substrate, wherein the protein molecules exhibit an ordered close packed arrangement due to recrystallization after thermal treatment.

A method for producing said uniform protein thin film comprises the steps of: a) forming a monolayer of the protein on a solid substrate; b) heating the film on the substrate to a temperature below that at which the protein is denatured; C) cooling the film on the substrate; and d) optionally applying one or more further protein layers and/or applying one or more heating/cooling treatments.

According to this invention an apparatus for carrying out the above method comprises: a) a reactor chamber for particles, the chamber having an inlet for a gas flux, an inlet for injection of activation reagent and optionally electrodes for producing an electric discharge, and an outlet for an aerosol of particles suspended in a gas flux; b) a Langmuir trough; and c) a collector chamber connected to the trough and arranged for collection of particles;
the outlet of the reactor chamber being arranged with respect to the trough to permit particles to be spread on the surface of a subphase contained in the trough.

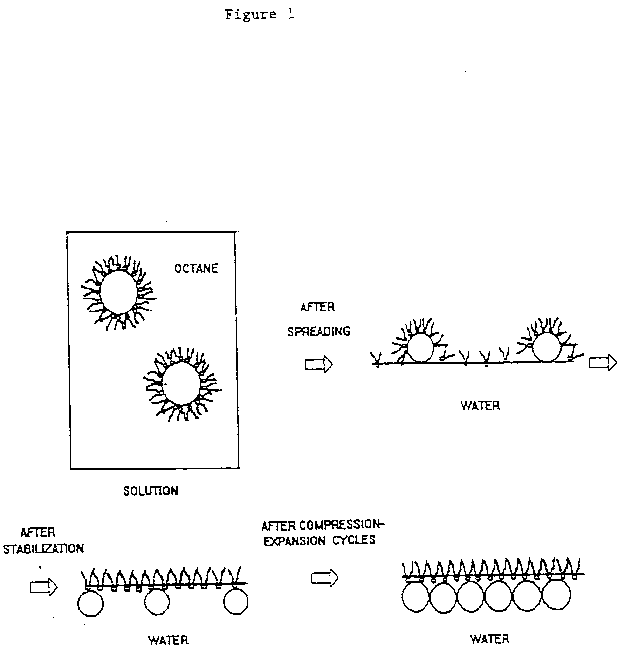

A preferred embodiment according to these aspects of the invention will now be described with reference to Figures 1 to 7 inclusive.

Here we will apply the reversed micellar approach to the construction of cytochrome C containing LB films. Major attention will be paid to the preservation of the secondary structure of the protein in the LB film and to the molecular organization of the film.

The figures show the following:
Figure 1. The model of the formation of LB films using reversed micellar solutions. Initially, cytochrome C molecules are solubilized in the solution of AOT reversed micelles in octane. Spreading of the solution reorganizes the micelles in such a way that AOT molecules form a monolayer at the air/water interface and cytochrome molecules are attached to their head-groups. Application of compression-expansion cycle several times results in the removal of excess molecules of AOT from the water surface and in the formation of closely packed monolayers both of AOT at the interface and of proteins in the water in the vicinity of the surface.
Figure 2. π-A isotherm of the monolayer of reversed micelles with cytochrome C after 4 cycles of compression-expansion. Arrows indicate the direction of the barrier motion (compression or expansion).
Figure 3. The dependence of the surface potential of the AOT -cytochrome C monolayer with respect to the area per one cytochrome C molecule (2 cycles of the compression-expansion) Upper curves-compression, lower-expansion.
Figure 4. The dependence of the surface potential of the AOT monolayer (reversed micelles without cytochrome C) with respect to the area per AOT molecule (2 cycles of compression-expansion). The small value of the area per molecule indicates that penetration of AOT molecules into the water volume takes place immediately after spreading of the monolayer.
Figure 5. Circular dichroism spectra of the cytochrome C in phosphate buffer (1), of the solution of reversed micelles (2), of LB films (9 monolayers) deposited by use of the reversed micelles as spreading solution (3) and of LB films (12 monolayers) deposited by use of the AOT reversed micelles without cytochrome C as spreading solution (4).
Figure 6. X-ray pattern of the sample, containing 10 periods (AOT-cytochrome C-AOT), deposited using reversed micelles as spreading solution.
Figure 7. The model, representing the molecular structure of the LB film, deposited by use of the reversed micelles as spreading solution-cytochrome C monolayer is placed between the head groups of AOT molecules in adjacent monolayers.

### Experimental Details

The protein, cytochrome C from horse heart, was obtained from Sigma. Prior to use, the commercial preparation was dissolved in phosphate buffer 25 mM, pH 7.5, dialyzed against the same buffer, and concentrated. The obtained solution was used further at a concentration of 6.8 mg/ml.

Sodium diisooctylsulfosuccinate (Aerosol OT, AOT) and n-octane were obtained from Fluka and used without further purification.

Reversed micelles of AOT in octane were prepared according to the standard procedure described elsewhere. Cytochrome was solubilized at the hydration degree of 8.6 (for explanation see Results).

Monolayer studies and transfer of the films onto solid substrates were done in a MDT LB trough (Russia). The trough size is 240 x 100 mm and the volume - 150 ml. The system provides for bilateral compression, with the surface pressure, surface potential, and deposition point appliances positioned in the centre of the trough. The surface pressure sensitivity was 0.05 mN/m. Surface potential measurements were done with a vibrating electrode and the sensitivity was 10 mV.

Water purified by MiliQ system was used as a subphase (resistivity more than 18 MΩcm).

The monolayers were transferred onto solid substrates by horizontal lift technique (Langmuir-Shaefer method). Chemically polished silicon wafers were used as substrates for the deposition of the LB films for X-ray study and quartz slides (Surasil, Hellma) were used as supports for circular dichroism (CD) studies.

Structural investigations were carried out on a small-angle X-ray diffractometer with a linear position-sensitive detector. The measurements were done with the angular resolution of 0.02° (the resolution in the spacing determination was 0.05 nm).

Circular dichroism measurements were done on a Jasco J-710 spectropolarimeter at a protein concentration of 0.5 mg/ml in the 190-260 nm range at a resolution of 0.1 mdeg/cm and time constant of 8 sec. The instrument was calibrated for inactive sample artefacts with a known standard.

### Results

As a first step, cytochrome C was solubilized in the reversed micelles of AOT in octane. Since the extent of polar interactions is determined by the surface area of the contact, apart from other factors, it was feasible to select a point of spatial compatibility of the protein molecule and the micelles.

The inner surface of the spherical cavity of reversed micelles is charged negatively due to the presence of the head groups of the surfactant. When a globular protein is solubilized in the reversed micelles, it is circumfered by the surfactant molecules that are thus interacting with the surface charges of the protein globule. The smaller the distance between the polar heads of surfactant molecules and the protein surface, the stronger the resulting interaction.

The dimensions of the inner water cavity of AOT reversed micelles are determined solely by the water content in the system, other conditions being unchanged. The water content is characterized by a parameter called "hydration degree", or wₒ, which is molar ratio of water to surfactant concentrations in the system. Thus, choosing a micellar matrix into which the protein "fits" tightly, proper contact of the protein and surfactant molecules should be provided along all the inner surface of the reversed micelle.

Cytochrome C, which is a globular protein with the molecular weight of about 12.5 kDa, is sufficiently well approximated by a sphere with a diameter of 3.4 nm. The hydration degree of 8.6 corresponds to nearly the same diameter of the inner cavity of micelles. This was exactly the value which was chosen for the solubilization of the enzyme prior to spreading at the water subphase.

Deposition of a small droplet of the reversed micellar solution onto the water surface resulted in a marked increase of the surface pressure (deposition of a 10 µl droplet resulted in an increase in the surface pressure of about 20 mN/m). This should be due to the reorganization of the micelles at the air/water interface in such a way that AOT molecules of the monolayer are turned with the hydrophobic tails from the water surface, and the protein molecules are under the water, bound to the surfactant head groups (Fig 1).

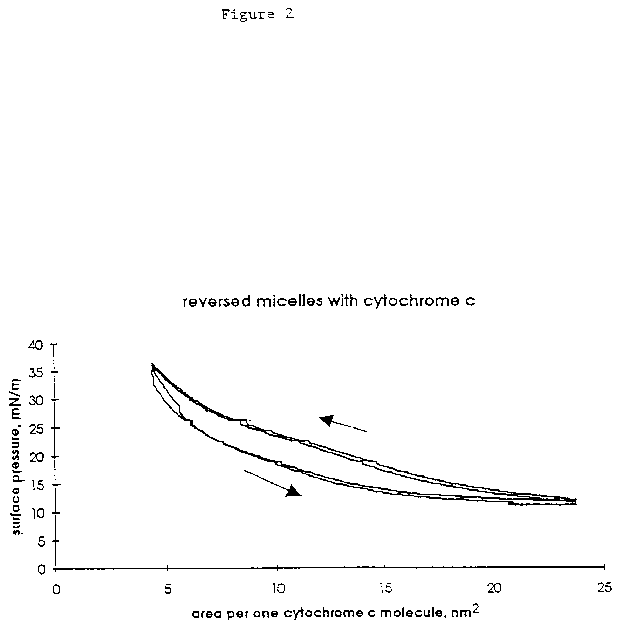

The π-A isotherm of a spread reversed micellar monolayer is presented in Fig. 2. During initial compression-expansion cycles the curve was not reproducible, probably as a result of the stabilization processes taking place in the film. The reproducibility of the π-A isotherm was achieved after 4 cycles of compression-expansion.

π-A isotherm of "empty" reversed micelles of AOT (without cytochrome) is similar to that of the reversed micelles with cytochrome C. Thus, the main reason for the increase of the surface pressure is mainly the presence of the surfactant at the air/water interface.

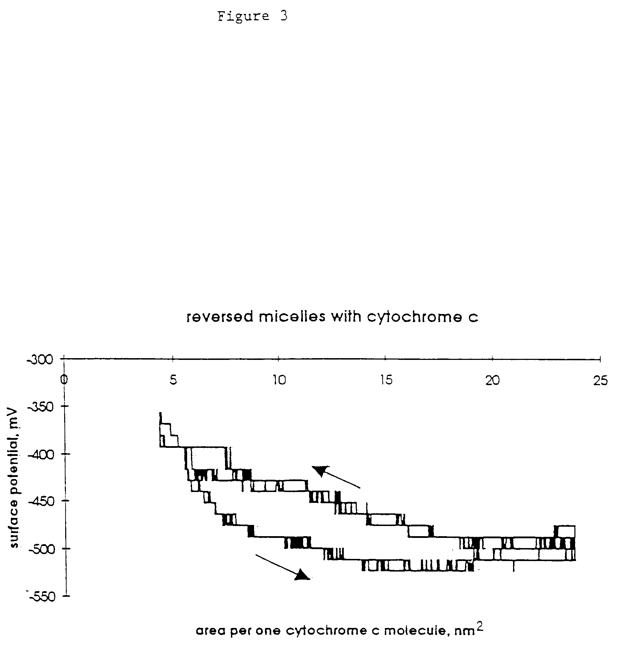

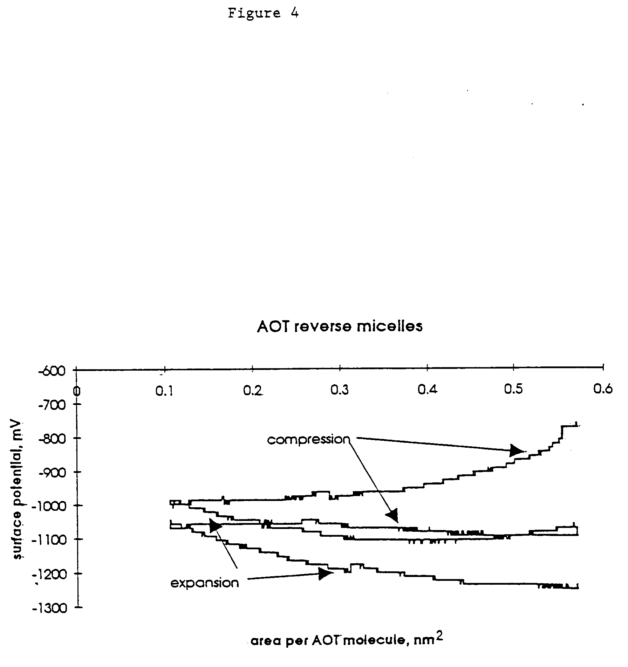

The presence of the protein in the system can be registered by surface potential measurements. The dependencies of the surface potential of the reversed micelles with the cytochrome C and without are presented in Fig. 3 and Fig. 4, respectively.

It is evident from Fig. 4 that for reversed micelles which do not contain protein molecules, the surface potential decreases continuously in the expanded region after each compression-expansion cycle. This could be due to the fact that surface concentration of the surfactant decreases after each cycle. The AOT monolayer is not stable at the air/water interface and each compression-expansion might result in a decrease of the effective amount of surfactant molecules at such interface (most probably the rest goes over into bulk solution in the form of normal micelles at least in the proximity of the interface where the effective concentration should be higher that the critical concentration of formation of normal micelles; however, it is possible that separate surfactant molecules dissolved in the solution, or that micro collapses are formed in some regions of the monolayer).

Protein-containing reversed micelles do not exhibit a similar behaviour, that is, continuous decrease of the surface potential was not observed. The curves are reproduced during repeated compression-expansion cycles (Fig. 3), which definitely means that the surfactant-protein complex is more stable at the air/water interface and, since the surface potential values per single molecule area are reproduced, implies that this complex constitutes the relatively stable monolayer unit.

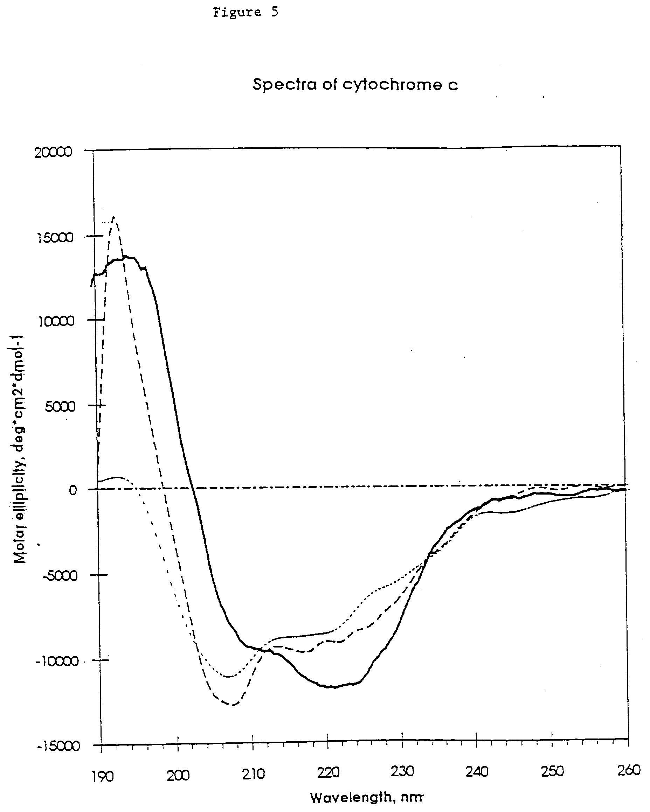

To elucidate the possible structural changes in the protein molecules, circular dichroism spectra were registered (Fig. 5) The first fact observed was a certain change in the CD spectrum of the cytochrome solubilized in reversed micelles in respect to the aqueous solution. This is brought forth by the effect of the micellar matrix, which is known to induce certain conformational changes in proteins¹³. However, it has also been established that such changes do not necessarily imply the loss of functional activity. The spectrum of the protein in LB films, deposited by the present technique, is similar in all respects to that of the protein in reversed micelles. This means that the conformation of the cytochrome C in the LB film is retained the same as it has been before the deposition, in reversed micellar solution. The molar elipticity values of an "empty" LB film (without protein included), deposited from a solution constituted originally of "empty" LB film (without protein included), deposited from a solution constituted originally of "empty" reversed micelles of AOT, were used as a baseline for all the measurements to exclude possible effects of adsorption, although it might be of insignificant magnitude. Thus, the spectra presented are indicative of the protein structure only.

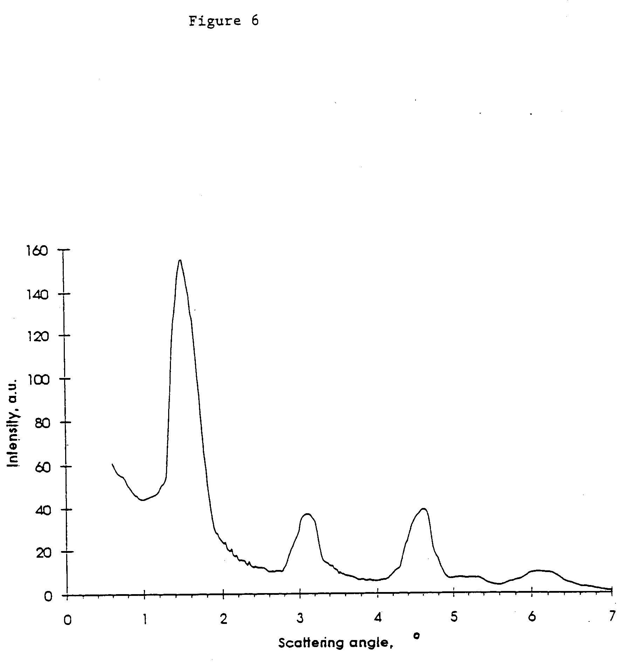

The X-ray curve, obtained from the sample, containing 10 periods, is presented in Fig. 6. The position of the Bragg reflections corresponds to the spacing of 5.5 nm. Half-width of the reflections corresponds to the order length of about 40 nm, that is, practically to the overall film thickness.

### Discussion

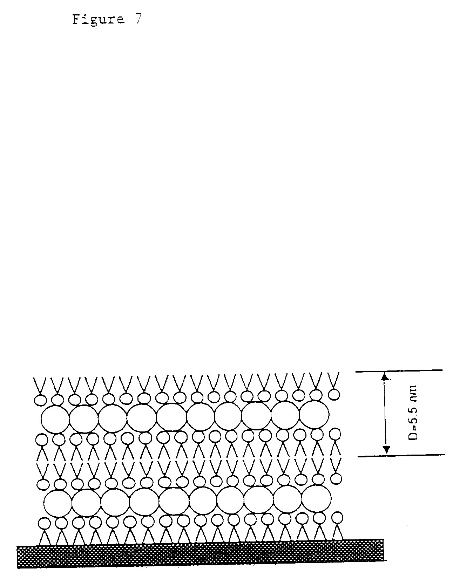

From all of the above data, as cytochrome C is a water-soluble protein, it appears reasonable to suggest that the structure of the elementary unit of the LB film is that proposed in Fig. 7: a monolayer composed of protein molecules is included between head groups of surfactant monolayers, like bilayer or sandwich-type structure in biological membranes. Thus, the period length should represent the thickness of two surfactant monolayers and one protein monolayer.

The molecule of cytochrome, as was mentioned before, is approximated by a sphere with a diameter of 3.4 nm. For the period to be equal to 5.5 nm, the surfactant bilayer should have a thickness of about 2.0 nm. The hydrocarbon chain of AOT molecule contains 8 carbon atoms (but only 6 are arranged in a straight line position). Hence, if the molecules are arranged vertically in the LB films, the length of the surfactant bilayer in the period should be about 1.5 nm, which still gives some space for the dimensions of the head groups that should not be completely neglected.

We can propose the following mechanism of metalloprotein LB film formation from reversed micellar solutions. After the solution of AOT reversed micelles is placed at the air/water interface, it spreads itself to cover all the water surface. The solvent evaporates, the micelles in contact with water rearrange themselves to form a monolayer of surfactant. The protein molecules are below the air/water interface, but associated with the head groups of the surfactant by charge interactions. At the beginning, there is an AOT monolayer with randomly attached protein monolayer beneath. It is important to have really only a monolayer of the protein with no additional protein molecules in the bulk of the subphase ( it enables to avoid irregular adsorption of protein molecules to the monolayer). Thus, in the resulting LB film molecular architecture can be conceived - deposition of the protein layers one after the other in desired variation with other functional elements, all this with high reliability and reproducibility.

Repeated utilization of compression-expansion cycles results in diminishment of the AOT molecule concentration at the water surface. Since the hydrocarbon chain has a small length, the AOT molecules themself cannot form a stable monolayer at the interface. The surface concentration of the AOT molecules decreases because of the penetration of surfactant molecules into the bulk of the subphase during compression (in a form of usual micelles). The reduction of AOT surface concentration continues until the moment when the amount of AOT molecules is such that the close packing of molecules at the air/water interface corresponds to the close packing of the protein molecules under the water surface. Such complex monolayer results to be more stable (which is confirmed by reproducible π-A isotherm and surface potential measurements).

The close packing of the protein in the layer is also substantiated by a good X-ray diffraction pattern that was obtained. If protein molecules in the intermediate layer were not closely packed or not ordered, it would be impossible to obtain such an X-ray curve, like that in Fig. 6. The formation of the structure, namely the protein monolayer between surfactant monolayers, is likely to take place during the transition of the substrate through the meniscus according to mechanism suggestion by Kato¹⁵.

The described procedure of the protein LB film formation yielded a highly ordered (with respect to usual protein LB films) structure, in which the secondary structure of the protein was preserved equal to the structure in the initial solution used for deposition - reversed micelles of Aerosol OT. The fact that protein molecules were intercalated between the surfactant head groups might have an important role, because it might provide a "shield" for the protein molecule against unfavourable external factors. Several applications can be envisaged from such ordered films of metalloproteins, paving in the long range the way to bioelectronics¹⁶.

### General Procedure for Thermal Stabilization of Protein Thin Films

The understanding and the achievement of protein thermal stability is a very important goal both from basic and applied point of view (Nicolini et al., 1992), as it requires a deep knowledge of all the parameters involved in the structural stabilization and as it is of fundamental importance in all those cases where proteins are used as functional elements for biodevices.

This aspect of the invention involved study of proteins from different classes: photosynthetic reaction centres, monoclonal and polyclonal antibodies, various metalloproteins and thioredoxin.

Many kinds of protein Langmuir-Blodgett (LB) films have been successfully deposited and functional properties shown to be preserved (Lvov et al., 1990).

During this study we provided direct and indirect structural and functional assays by the following techniques: Circular Dichroism, Surface Potential Measurements, Scanning Tunnelling Microscopy, Xray Diffractometry, Absorption spectra, Nanogravimetric Measurements. The results we got allowed an interpretation in a coherent fashion within the general concept of two-dimensional molecular order induced by Langmuir-Blodgett film formation.

### Materials and Methods

LB film was formed in a Langmuir trough spreading the protein solutions at the liquid-gas interface. The monolayers were deposited with the Langmuir-Schaefer (horizontal lift) technique (Langmuir and Shaefer, 1938) on solid substrates in the range 25-35 mN/m of surface pressure.

Not oriented films were prepared by spreading the solution directly onto the solid substrates and drying them gently in vacuum for 4 hours.

Measurements as a function of temperature were always performed heating the samples at a fixed temperature for 10 minutes in a commercial oven and performing measurements at room temperature after the samples have reached it again.

### Experimental Assays

Functional activity was monitored as a function of temperature by surface potential measurements on solid substrate using an in-home made device. This technique, which was widely used for the investigations of monolayers at the air/water interface (Tredgold and Smith, 1983; and Christie et al., 1985) and more recently on the solid substrate (Facci et al., 1993), can measure the surface potential (sensitivity=1mV) arising from dipole and charge distributions in one or more deposited monolayers monitoring the current induced by them in a circuit, one end of which is equipped with a vibrating electrode placed near (≈1mm) the monolayer surface and oscillating at its resonance frequency (282 Hz).

Protein samples were deposited onto SnO₂ electrodes for functional activity investigations (one LB monolayer) and onto 1mm thick quartz slides for optical absorption spectra measurements (2 mg/ml RC solution).

CD measurements were carried out with Jasco 710 spectropolarimeter in the wavelength range 190-260 nm both on solution and film samples. Spectra normalization was performed according to the approach suggested by Nicolini et al., 1993.

Nanogravimetric measurements were performed with a homebuilt balance (Facci et al., 1993) based on monitoring the frequency shift of quartz resonators, linearly proportional to the deposited mass (Sauerbrey, 1964). This device provides a sensitivity of 0.57±0.18 ng/Hz and a detection limit of 0.3±0.1 ng (Facci et al., 1993).

In other cases functional activity in films was tested by coating the resonator surface with an antibody layer and then monitoring the amount of antigen bound to this layer as a function of the exposure time to the antigen solution. Measurements were performed in a closed chamber; after each exposure to antigen solution for increasing time intervals, quartz resonators were washed to remove non specifically bound antigen molecules and dried with a nitrogen flow (Dubrovsky et al., 1992).

X-ray measurements were carried out by means of a small angle X-ray diffractometer equipped with a linear position-sensitive detector (Mogilevski et al., 1984). Cu K (1.54Å) radiation was used. The angular resolution of the detector was 0.01°. The sample was rotated with respect to the X-ray beam and scattered intensity was collected by the detector in the whole angular range (0°-7°).

Samples for the X-ray measurements were deposited onto silicon substrates according to the following procedure: not heated samples were obtained by depositing 10 monolayers; heated samples were prepared depositing one layer and heating it as in the case of Circular Dichroism.

Samples for STM investigations were prepared depositing one monolayer onto a wafer of highly oriented pyrrolitic graphite.

### Conclusions

Summarizing the results here reported, we showed that protein functionality in LB film is retained under thermal treatment. Even in the worst case it was stable up to 75°C, displaying 40°C shift with respect to proteins in the solution only due to the LB organization with respect to the not oriented counterpart.

In the second part of the work it was shown that LB induced molecular close packing provides protein thermal stability, playing a more important role than dehydration (Erokhin et al., 1993).

LB film deposition provides the necessary constraints (decrease of entropy) in the molecular assembly to induce recrystallization after thermal treatment. Heating the LB samples gives enough energy to bring the molecular assembly from the initial metastable state (Bourdieu et al., 1993) to a new state, coming back from which (by cooling down slowly to room temperature) a more ordered structure is reached (local energy minimum).

New phenomena connected with the improvement of the layer activity, caused by the improved order, were found. These findings can be used not only for widening the working temperature range of biodevices and biosensors based on protein layers, but also allow to improve the performances of the sensitive protein layers.

Finally it is possible to conclude that the increased thermal stability of proteins in LB films is a general phenomenon which depends mainly upon the close packing of the molecules in the film.

On the other hand, the recrystallization process, taking place in LB protein films undergoing heating-cooling cycles, is a general phenomenon as well, caused by the molecular order of the initial film.

### Possible Applications

As the findings of the study are general they can find the application in all the branches of science and technology where proteins are used. The organization of layers by LB technique will increase the thermal range of protein based device operation.

It can even open new applications for protein layers impossible to realize without thermal stability. For example, the application of enzyme layers with increased thermal stability in gas chromatography. The other example can be bioelectronic devices. It will allow to construct biosensors to be used in extreme environmental conditions.

Moreover, the thermal treatment of protein LB films will provide the increase of the activity of the layer (catalyzing properties).

Protein recrystallization in LB films induced by the thermal treatment can also be regarded as a new method for the preparation of 2D and 3D protein crystals even for those proteins whose crystals are difficult to grow by conventional techniques.

### Deposition of Protein Thin Films onto the Surface of Microparticles

This aspect of the invention consists in a process of production of particles with the protein molecules deposited onto them and thus rendered thermostable.

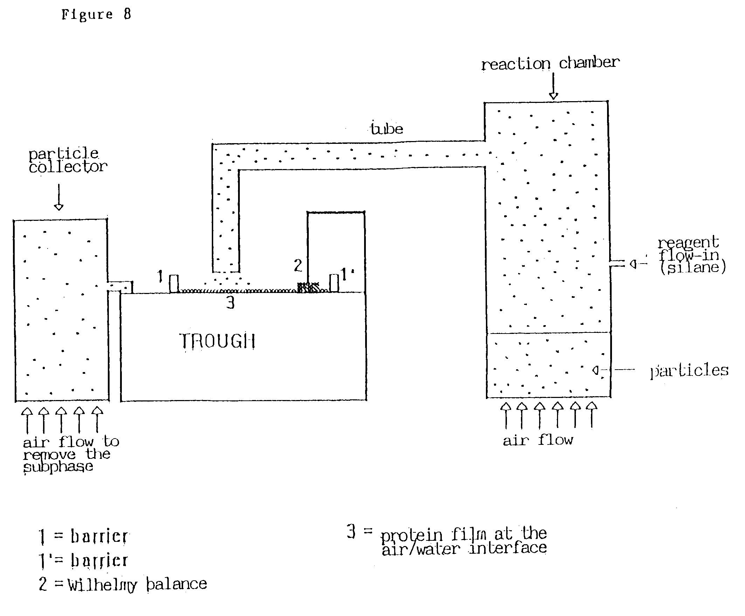

The main principle of deposition is represented in Fig. 8.

The particles are placed in the inferior part of the reactor (reactor chamber). A flux of gas diffuses the particles in the reactor volume in the form of an aerosol (suspended colloid particles). The outer wall of the reactor chamber carries an opening which enables the injection of a reagent capable of rendering chemically active the surfaces of the particles (e.g. a silanization process). The reactor is provided with electrodes for introducing the possibility of an electric discharge to give a surface charge to the microparticles in case of necessity.

The protein monolayer is formed at the subphase surface in a Langmuir-Blodgett trough. After the monolayer has been compressed to the desired surface pressure, a tube above the trough is opened and the microparticles are spread over the surface of the monolayer due to a slight increase of the inner pressure of the reactor. Thus, the activated particles react with the monolayer which is deposited onto the surface of the particles.

After this step the surface pressure sensor (Wilhelmy balance) is shifted with the barrier indicated as 1 in Fig. 8. The barrier indicated with 1' is moved and therefore pushes the material present at the surface to the collector tube and then into a collector chamber where the product is subjected to a treatment with a gas flux to remove the excess of the subphase.

The applications of the particles thus produced range from conventional chromatography (stable enzyme- and affinity-carriers without contamination problems), to the possibility of applying elevated temperatures, to PCR with the possibility to utilize mesophilic enzyme of much reduced cost.

For many applications it is essential to have an extended surface with large area covered by active (protein) molecules, a fact which is known from the theory of chromatography and technology of chemical-biological processes. The planar technology permits to create "smooth" layers that have a limited active surface area; whereas the application of microparticles enhances significantly the area of the active surface within the same (or even smaller) volume of the reactor. Since in both cases mentioned (chromatography and PCR) it is essential to have high overall activity of the biomolecules, the utilization of the microparticles should markedly increase the efficiency of the process; e.g. packing of column with beads carrying the required molecules for bioaffinity or other applications.

There is no limitation for the nature of the substrate particles, except that absolutely inert materials (e.g. Teflon™ or similar fluoro-polymers) do not provide sufficient binding between the protein and the surface. However, it seems that this limitation could be overcome by pre-treating the surface of support with suitable chemical reagents.

The approximate size range of the particle lies within 10 nm - 1 mm interval. The maximum possible size could depend on the density of the material - the surface tension should be sufficient to guarantee the floating of particles at the interface.

### Ordered Protein Thin Films Obtained by means of Chemical Functionalization and Site-Specific Mutagenesis

Protein immobilization on solid substrates is extremely important both from theoretical and practical point of view.

In fact, the formation of lipid-protein complex film gives information on the typical molecular structure of biological membranes permitting, in addition, the study of the electron transfer processes that take place on the membranes (1-5). In particular, if the lipid-protein complex films are also ordered it might be possible to study the mechanisms that regulate the bidimensional assembly of biomolecules.

From the practical point of view the protein film formation permits the creation of devices with molecular dimensions, useful in the field of biosensors, of affinity chromatography and biomedical analysis (6-8). For the realization of bioelectronic devices it is necessary that protein film should be also ordered so that the electron transfer properties are homogeneous for the entire system.

It is possible to achieve protein film formation at the air/water interface by means of Langmuir-Blodgett (LB) (9) and Langmuir-Schaefer (LS) (10) technology, however, the two main problems arise during protein film realisation:
1) soluble proteins are not amphiphilic molecules that naturally organise themselves at the air/water interface, but prefer to "dissolve" in the bulk solution.
2) the surface tension of water denatures the protein since the forces that maintain the protein structure are of the same order of magnitude as surface tension of water.

To overcome these problems it is essential, on one hand, to modify the film formation and deposition techniques and, on the other hand, to be able "to manipulate", as much as possible, the protein sample.

The problem of "sinking" of the protein sample spread at the interface into the bulk phase can be limited increasing the speed of compression up to 3.5 mm/sec, to ensure close packing of protein molecules even before they are able to go over into the bulk water phase. Nevertheless, presumably at least the 30% of the protein goes in the bulk solution even if fast compression is applied.

The problem of the denaturation can be dealt with by increasing the barrier compression speed since in such a way the protein molecules stay separated at the air/water interface the least possible period of time and are almost immediately closely packed. The denaturation can be completely avoided if the surface tension of water is decreased by pre-forming at the air/water interface a lipid layer that can bind specifically or non-specifically to the protein (11-12). In fact, the formation of cytochrome c film by preforming a lipid layer in which the head group has an opposite charge with respect to the protein surface is reported (13). The lipid used is phosphatidylserine because at the pH used for the deposition (pH=7.4) the cytochrome has an excess of 8 positive charges and the introduction of the protein is done after the preliminary formation of the lipid layer with anionic head group. The adhesion of cytochrome is controlled by means of polarised spectroscopy that indicates, in addition, the cytochrome orientation in the film: the haem plane is oriented parallelly to water surface.

A covalent bond between the lipid and cytochrome c is realized by the team of Pachence (14): in this work yeast cytochrome c is utilized that has a cysteine in position 102 which can react with phosphatidylserine and with thioethylstereate. The film is deposited and subsequently analysed by means of spectrophotometry with polarized light. These measurements also indicate that the cytochrome c in the film is oriented with the haem group parallel to the substrate surface. The goal of the present work is to achieve, by means of LB

and/or LS technique a stable and oriented protein film by realizing specific interaction between a synthetic lipid molecule and a metalloprotein. The metalloproteins chosen, are cytochrome c, azurin and cytochrome P450scc. The reaction between the synthetic lipid and the protein molecule involves an arginine residue that is present in single copy at the protein surface of cytochrome c and azurin. Since cytochrome P450scc has several arginine residues, it is necessary to modify some of these amino acids so as to leave only one in the desired position in order to ensure unequivocal functionalisation. The "anchoring" lipid must have an aliphatic chain of about 20 carbon atoms in order to warrant film stability, and the head group in the diketone form to bind specifically to arginine. The analysis of lipid deposition is done with small angle X-ray diffractometry in order to elaborate the best conditions for the formation of the lipid-cytochrome complex at the air/water interface. The complex, after the deposition, is preliminarily characterized by means of absorption spectroscopy, spectropolarimetry and small angle X-ray diffractometry.

### Materials and methods

### a) selection of the metalloprotein

The choice of biological molecule for oriented protein film realisation must meet the following requirements:
1) detailed knowledge of primary structure of the protein to be used;
2) knowledge of biophysical and biochemical characteristics of the utilized system;
3) possibility to clone the gene of the protein in order to produce it in very large amount;
4) the possibility to engineer the protein in order to optimize it for subsequent applications;
5) presence of asymmetrical charge distribution in the molecule that can be useful for orientation of the protein by means of an external electrical field.

Cytochrome c has all these properties and in addition two other characteristics relevant for the formation of oriented protein film: i) it is commercially available at low cost; ii) the external surface of cytochrome has only one arginine residue which permits selective specific functionalisation. The same considerations are valid also for azurin, except for the commercial availability.

If the protein does not possess any unique anchoring sites or they are not located in the required position, using site-specific mutagenesis it is possible to insert the amino acid in the proper position and, therefore, to apply the aforementioned approach for film formation. The choice of the useful positioning of the amino acid to be functionalised can be estimated by means of graphic on-screen visualization of the mutated protein and by applying energy minimization procedures. Since the cytochrome P450scc has more than one arginine on the external shell, the cytochrome cannot be ordered in the 2D space in an unambiguous way.

### Cytochrome c

The determination of amino acid composition of the cytochrome c external shell is carried out on the basis of the protein coordinates deposited in the Brookhaven protein data bank with the Silicon Graphics Iris Crimson workstation (file name pdblcyc.ent). The total amino acid composition of cytochrome c from horse heart is reported in table I (15). Cytochrome c is present in all aerobic organisms and in animal cells in the mitochondria. Cytochrome c is found along the electron transport chain of the oxidative respiration pathway and for this reason is a protein well conserved during the evolution. The cytochrome c has a prosthetic heme group containing an iron atom that functions as a redox center during the process of electron transport.

The protein consists of 104 amino acids plus the heme group covalently bound through cysteinil residues 14 and 17. The iron in the center of the heme has two axial bonds with methionine 80 and hystidine 18 (16). The protein molecular weight is 13 kDa and is approximated by a sphere of 34 Å diameter.

Only two cysteine and two arginine residues are present in the molecule. The cysteine, being bound to the heme, cannot be functionalised. One of the two arginines is internal and cannot be used for anchoring being unaccessible. The other one, in position 91, is on the external shell of the cytochrome c and can be functionalised in a unique way.

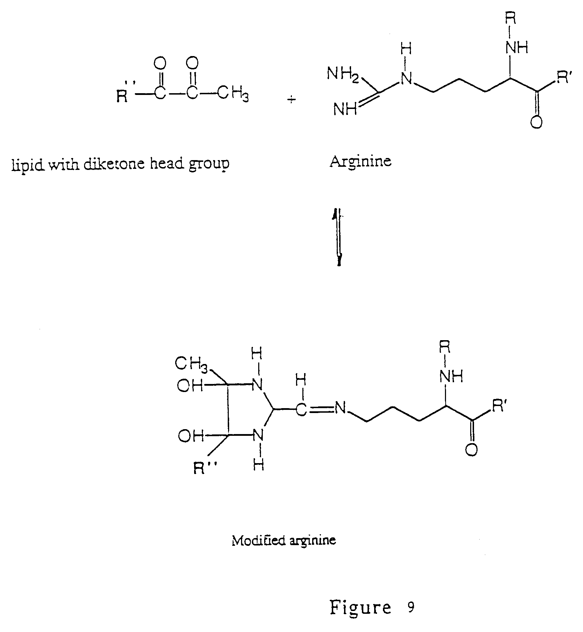

Figure 9 shows the chemical reaction scheme between α-diketonic group and the arginine residue. R'' represents the alkilic chain.

The same procedure, described above for cytochrome c, is applicable to other types of proteins.

### Azurin

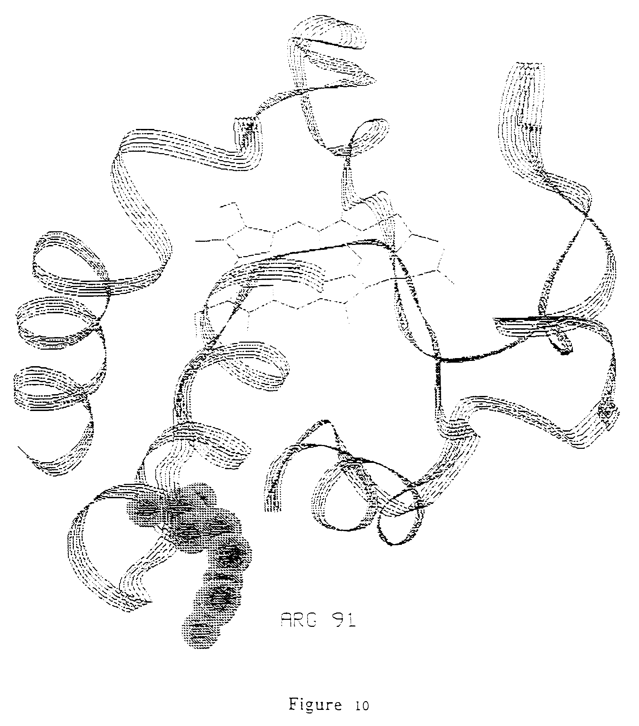

Azurin is a protein consisting of 128 amino acids with a molecular weight of 14 kDa, containing a copper atom which is responsible for a high redox potential. Azurin is present in the bacteria *Pseudomonas aeruginosa* functioning as electron vector when the bacteria are grown under nitrogen depletion conditions (17-18). The copper atom is coordinated with two histidine residues in position 46 and 117. Computer-aided (Silicon Graphics Iris Crimson workstation) visualization of the protein structure was employed (Brookhaven protein data bank; file name pdblazu.ent). The total amino acid composition of the azurin is shown in table II. Only one arginine (Arg 79), is present in the protein structure and is located on the external part of the protein and therefore can be subjected to functionalisation (figure 10).

Figure 10 shows the arginine selected for anchoring in cytochrome c (Bonito heart; code Protein Data Bank pdbcyc.ent). The cytochrome c from horse heart has the same arginine in position 91.

### Cytochrome P450 scc

The cytochrome P450scc extracted from bovine adrenal cortex is a protein present in the mitochondrial membrane which composed of 520 amino acids with a molecular weight of 56 kDa. Cytochrome P450scc is a metalloprotein containing an iron atom as a redox center (19). The shape of the protein molecule can be approximated by a pyramid with a triangular base, the side of which is approximately 70 Å.

The computer-aided visual analysis of the 3D structure (Silicon Graphics Iris Crimson; Brookhaven data bank; file name pdblscc.ent) shows that the total amount of arginines is equal to 29 and six of them (table III) are accessible from the outside. On these 6 residues site-specific mutations have to be performed in order to obtain a unique reactive residue. The suggested mutations have to be verified with molecular graphics approaches in order to determine if these modifications induce protein conformational and/or functional changes relevant for the examined protein.

The choice as to which of the 6 amino acid to maintain unaltered is essential in order to have the desired orientation for the protein.

The procedure indicated for the cytochrome P450scc is useful for any protein that has to be anchored, in fact, after the control of the superficial amino acid and after the carrying out of eventual mutations, the proposed strategy is the same.

### b) chemical synthesis of diketonic lipid

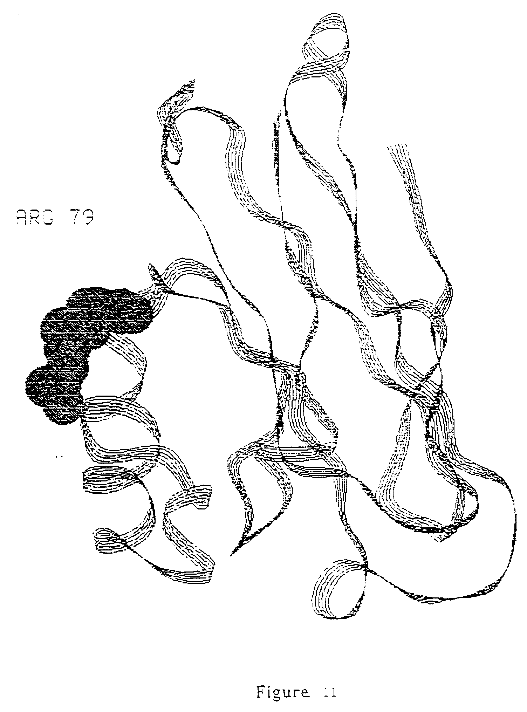

The "anchoring" lipid must have two fundamental characteristics: i) an alkilic chain of at least 18 carbon atoms and ii) the polar head with a diketonic group. In such a way the molecule can be correctly used for film formation by means of LB technique and can react also with the arginine of the cytochrome as shown in figure 11 (20).

Figure 11 shows the arginine 79 selected for anchoring in azurin (code Protein Data Bank pdblazu.ent).

### c) film formation, deposition and X-ray characterization of the diketonic lipid

Materials: borate buffer 50 mM pH 8.6, diketon 0.5 mg/ml in CH₂CI₂, silicon.

### Film formation at the air/water interface

The utilised subphase for the film formation and interaction of the lipid with the cytochrome is the borate buffer. The spreading of the lipid is done in the following way: 40 µl of the lipid solution are dispersed at the air/water interface and the isotherm is recorded after 5 minutes. The compression speed of the barrier is 0.2 mm/sec..

### Substrate preparation

The substrate for deposition is non-doped silicon. The washing of the sample is done with a detergent and then rinsed with bidistilled water and dried under nitrogen flow. The substrate is immersed in the chromsulphur mixture for 30 minutes then washed in bidistilled water and dried under nitrogen flow.

Silicon hydrophobization is carried out dipping the substrate 3 times in a solution of hydrofluoric acid (48 %), rinsing with water and drying under nitrogen flow.

For the spectrophotometric and spectropolarimetric characterization the deposition substrate is a quartz slide cleaned as indicated for the silicon.

### Deposition of diketonic lipid film

From the examination of the isotherm curve the best deposition pressure is chosen. It is possible to make two different kinds of deposition: Langmuir-Schaefer (LS) and Langmuir-Blodgett (LB).

### 1) LS deposition

The diketone at the air/water interface is compressed up to the surface pressure of deposition with a feedback of 10, therefore 20 layers of the film are deposited for the X-ray analysis. The deposition substrate is washed and hydrophobized silicon.

### 2) LB deposition

Also in this case the film at the air/water interface is realised with the procedure previously described.

For the LB deposition the speed of dipping and pulling-out of the substrate is fixed. For the deposition of the first two layers the speed is 0.1 mm/sec to obtain a good quality of deposition. For the next layers the speed is increased up to 0.35 mm/sec. With such procedure a sample of 20 layers thickness is created and analysed with small angle X-ray scattering.

### X-ray characterization of the diketonic lipid film

The deposited films are analysed by means of X-ray small angle diffractometer with a source of emission wavelength of 1.54 Å and uncertainty of 0.01° in angle determination.

### d) interaction diketon-cytochrome c: spectrophotometry and small angle X-ray diffractometry

Materials: borate buffer 50 mM pH 8.6 diketon 0.5 mg/ml in CH₂CI₂, nondoped silicon, cytochrome (horse heart) purchased from Sigma.

### Preparation of cytochrome c solution

The cytochrome is dissolved in borate buffer to yield a final concentration of 0.5 mg/ml. The spectrum is recorded in the region between 240 and 600 nm, with a spectrophotometer UV/VIS Jasco 7800. The heme absorption peak is observable at 410 nm.

The same solution is utilized for the spectropolarimetric analysis. The analysis is carried out with a spectropolarimeter Jasco 710 in the region of peptidic bond absorption (180 nm-260 nm).

### Film formation, deposition and X-ray small angle diffraction, spectrophotometric, spectropolarimetric characterization of the lipid-cytochrome c complex

The binding reaction between diketone and cytochrome c is carried out in two modes: with the lipid in liquid-condensed and in liquid-expanded phase:
a) lipid compression up to deposition pressure (liquid-condensed phase) then adding of cytochrome and binding reaction, deposition;
b) lipid compression up to 6 mN/m (liquid-expanded phase), then adding of cytochrome c, binding reaction, deposition.

### 1) Lipid-cytochrome c reaction in liquid-condensed phase

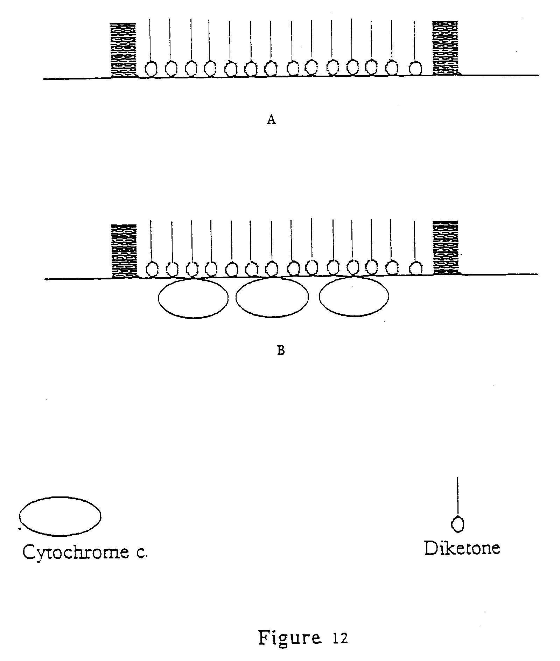

The reaction scheme is shown in figure 12. The utilized subphase is borate buffer as shown previously, on which 40 ml of diketon solution are dispersed. The spread lipid is compressed up to deposition pressure with a barrier speed of 0.2 mm/sec. As soon as the pressure of deposition is reached, the cytochrome is added at final concentration of 50 µg/ml. The system is incubated under such conditions for two hours. After incubation the vertical and horizontal deposition can be carried out. The deposition substrate is hydrophobized silicon as described in the previous sections. The samples are analysed by X-ray small angle diffractometry.

It is possible to make the deposition also on quartz slides to permit the film spectrophotometric and spectropolarimetric analysis. The quartz is hydrophobized by depositing arachidic acid at the pressure of 30 mN/m.

### 2) Lipid-cytochrome c reaction in liquid-expanded phase

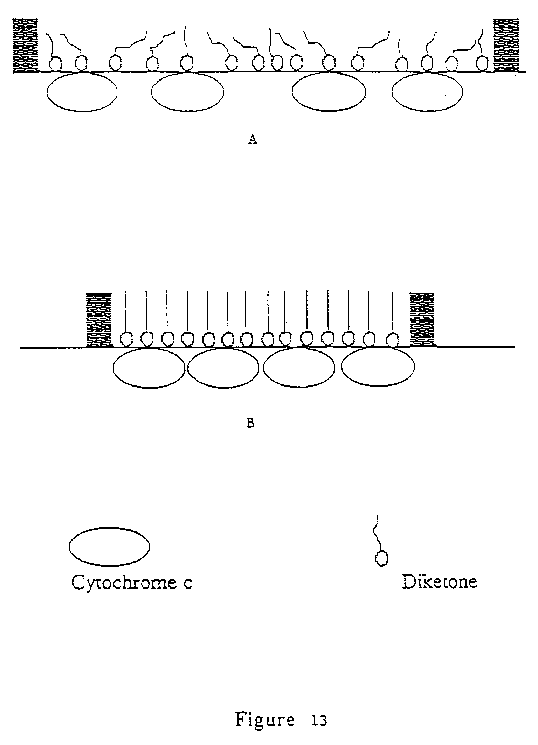

The scheme of the procedure is shown in figure 13. In this case the only difference in respect to the procedure described above is that the interaction between the lipid and the cytochrome c is done when the lipid is in the liquid-expanded phase. This is achieved compressing the barrier up to 6 mN/m with the barrier speed of 0.2 mm/sec. The interaction time between the lipid and cytochrome c is 2 hours. After incubation the film can be compressed to a final deposition pressure and then transferred onto silicon or quartz substrate (20 layers) for diffratrometric, spectrophotometric and spectropolarimetric analysis.

### Results and discussion

### Formation of film and its preliminary characterization

The isotherm of the diketone film is essential for the determination of the deposition pressure when the film is in condensed phase. The linear region of the isotherm represents the film in the liquid-condensed phase and in this region the area per molecule is calculated (9). All the phases of film formation, its deposition and interaction with cytochrome c are carried out in borate buffer since these are the best binding conditions as indicated in (20).

The deposition of film is carried out both with LB and LS technique to verify the best deposition conditions. The spectra of X-Ray diffraction indicate whether an ordered film has been obtained and the thickness of repetition unit for both types of deposition.

The subsequent phase of the work involves the interaction at the air/water interface between the lipid and cytochrome c which is carried out both when the lipid is in the liquid-condensed and in the liquid-expanded phase. In the first case the lipid, occupying all of the surface, prevents cytochrome from reaching the air/water interface and, thus, from denaturing (fig. 12, shows the reaction scheme between cytochrome c and 2,3-eneicosandione in the liquid-condensed form. (A) shows compression of lipid film up to deposition pressure and (B) shows immersion of cytochrome C in the subphase and its interaction with the lipid), but possesses an inferior capacity for reorientation which is useful for the optimization of the interaction during the binding reaction with arginine. In the second case (fig. 13, which shows the reaction scheme between cytochrome c and 2,3-eneicosandione in the liquid-expanded form (A) shows compression of the lipid up to 6 mN/m, immersion of cytochrome c in the subphase and its interaction with the lipid and (B) shows ulterior compression up to deposition pressure) the lipid, being in the liquid-expanded phase, has more freedom of mobility and, therefore, more possibility to "adapt" itself in the best way to the arginine of the metalloprotein. In this case a lower collapse pressure of the film at the air/water interface might be observed and it could mean that part of the protein molecules reached the air/water interface, denaturing and rendering the film more flexible but also that the reaction lipid-protein has taken place. The protein denatures since lipid molecules in the expanded phase do not cover all the aqueous surface which remains accessible to protein molecules. In both cases deposition of film on solid substrates is made to enable spectrophotometric, circular dichroism and X-Ray diffraction studies. The spectrophotometric measurements indicate the presence of adsorbance bands of prosthetic groups of metalloproteins (haem group for cytochromes), and confirm the presence of the metalloprotein and its oxidation state, while diffractometry measurements give information on the presence of an ordered film of the lipid-protein complex. The results of circular dichroism yield information about the degree of denaturation of metalloprotein in the film and, thus, also about the presence of the protein in the film, for proteins that do not exhibit specific adsorbance bands.

### Conclusions

With the described methodology it is possible to functionalise arginine residues of any protein, after a series of site-specific mutations, and to produce by means of LB technique ordered and oriented 2D films of lipid-protein complexes. The use of lipids is extremely important since it prevents denaturation of proteins at the air/water interface.

**Table I**

| Amino Acids | No. residues | Amino Acids | No. residues |
|---|---|---|---|
| Gly | 12 | Ala | 6 |
| Asp | 8 | His | 3 |
| Val | 3 | Thr | 10 |
| Glu | 12 | Pro | 4 |
| Lys | 19 | Leu | 6 |
| Ileu | 6 | Arg | 2 |
| Phe | 4 | Tyr | 5 |
| Cys | 2 | Met | 2 |

**Table II**

| Amino Acids | No. residues | Amino Acids | No. residues |
|---|---|---|---|
| Gly | 11 | Ala | 7 |
| Asp | 11 | His | 4 |
| Val | 10 | Thr | 9 |
| Glu | 4 | Pro | 4 |
| Lys | 11 | Leu | 10 |
| Ileu | 4 | Arg | 1 |
| Phe | 6 | Tyr | 2 |
| Asn | 7 | Trp | 1 |
| Ser | 10 | Gln | 6 |
| Cys | 3 | Met | 6 |

**Table III**

| Position Arg | External | Partially Screened | Internal |
|---|---|---|---|
| Residues¹ | 29, 82, 252, 321, 322, 473 | 35, 39, 52, 93, 147, 251, 305, 314 | 8, 113, 180, 218, 221, 226, 257, 347, 357, 385, 400, 412, 421, 426, 427 |
| Total | 6 | 8 | 16 |

| | | | |
|---|---|---|---|
| ¹ The number indicates the position in the cytochrome primary sequence | | | |

## Claims

1. A uniform protein thin film comprising a monolayer of oriented protein molecules on a solid substrate, the protein molecules exhibiting an ordered close packed arrangement due to recrystallization after thermal treatment.

2. A protein thin film according to claim 1, wherein the protein is unstable at a water/air interface or it is water soluble.

3. A method for producing a uniform protein thin film as defined in claim 1 or 2, which comprises the steps of:
a) forming a monolayer of the protein on the solid substrate;
b) heating the film on the substrate to a temperature below that at which the protein is denatured;
c) cooling the film on the substrate; and
d) optionally applying one or more further protein layers and/or applying one or more heating/cooling treatments.

4. The method of claim 3, wherein the heating is to a temperature between 25°C and 200°C.

5. The method of claim 4, wherein the heating is to a fixed temperature for a suitable time interval (from 1 minute to 10 hours).

6. The method of claim 4 or claim 5, wherein the heating is from room temperature and the cooling is to room temperature.

7. The method of claim 3, wherein the monolayer is obtained by spreading onto the solid substrate reversed micelles comprising the proteins of claim 2.

8. A uniform protein thin film comprising a monolayer of protein molecules on a non-planar solid substrate particle, including microspheres.

9. A film according to claim 8, wherein the particle diameter is in the range from 10 nm to 1 mm.

10. A method for producing a uniform protein thin film according to claim 7, 8 or 9, which comprises the following steps:
a) forming a protein monolayer at the air/liquid subphase surface of a Langmuir trough;
b) compressing the surface monolayer to a predetermined surface pressure;
c) spreading non-planar solid substrate particles such as microparticles over the surface of the protein monolayer thereby causing the particles to react with the monolayer of protein to deposit a monolayer of protein on the surface of the particles;
d) adjusting the surface pressure if required;
e) collecting the coated particles; and
f) removing any excess subphase if required.

11. A method according to claim 10, wherein the particles are suspended in a flux of gas in the form of an aerosol prior to step c).

12. A method according to claim 10 or 11, wherein the surface of the particles is rendered chemically active by treatment with a suitable reagent such as silane prior to step c).

13. A method according to claim 10 or 11, wherein the surface of the particles is given a static-electric charge prior to step c).

14. Apparatus for carrying out the method of claim 10, comprising:
a) a reactor chamber for particles, the chamber having an inlet for a gas flux, an inlet for injection of activation reagent and optionally electrodes for producing an electric discharge, and an outlet for an aerosol of particles suspended in a gas flux;
b) a Langmuir trough; and
c) a collector chamber connected to the trough and arranged for collection of particles;
the outlet of the reactor chamber being arranged with respect to the trough to permit particles to be spread on the surface of a subphase contained in the trough.

## Patentansprüche

1. Gleichmässig dünner Proteinfilm mit einer Einschicht von orientierten Proteinmolekülen auf einem festen Substrat, wobei die Proteinmolekülen, aufgrund einer Rekristallisation nach der Wärmebehandlung, in einer ordnungsmässig gepackten anordnung vorliegen.

2. Dünner Proteinfilm nach Anspruch 1, worin das Protein an der Wasser-Luft-Zwischefläche unbeständig oder wasserlösslich ist.

3. Verfahren zur Vorbereitung eines gleichmässigen dünnen Proteinfilms nach Anspruch 1 oder 2, mit folgenden Verfahrensschritten:
a) Bildung einer Proteinschicht auf einem festen Substrat;
b) Erwärmung des Films auf dem Substrat auf eine Temperatur, unterhalb, welcher das Protein denaturiert ist;
c) Kühlung des Films auf dem Substrat und
d) wahlweise Auftragung einer oder mehreren Proteinschichten und/oder Anwendung einer oder mehreren Wärme-Kühl-Behandlungen.

4. Verfahren nach Anspruch 3, worin die Aufwärmung in einem Temperaturbereich zwischen 25°C und 200°C vorgenommen wird.

5. Verfahren nach Anspruch 4, worin die Aufwärmung auf eine festgesetzte Temperatur in einer angebrachten Zeitdauer (1 Minute bis 10 Stunden) durchgeführt wird.

6. Verfarhren nach Anspruch 4 oder 5, worin die Aufwärmung von Raumtemperatur anfängt und die Kühlung bei Raumtempertur endet.

7. Verfahren nach Anspruch 3, worin die Einschicht durch Bestreuen des festen Substarts mit umgekehrten, das Protein nach Anspruch 2 enthaltenden Mizellen.

8. Gleichmässigen dünnen Proteinfilm enthaltend eine Einschicht von Proteinmolekülen auf einer unebenen festen Partikel, einschliesslich Mikrosphären.

9. Film nach Anspruch 8, worin der Partikeldurchmesser in einen Bereich 10nm bis 1 mm liegt.

10. Verfahren zur Herstellung von gleichmassigen dünnen Proteinfilmen nach Anspruch 7,8 oder 9, das folgende Verfahrensschritte aufweist:
a) Bildung einer Proteinschicht an der Luft-Flüssigkeit-Subphasefläche eines Langmuir-Trogs;
b) Zusammendrücken der Einschicht bis zu einem bestimmten Flächendruck;
c) Auftragung von unebenen festen Substratepartikeln auf die Oberfläche der Protein-Einschicht wodurch die Partikeln mit der Protein-Einschicht reagieren und eine Protein-Einschicht auf der Oberfläche der Partikeln aufschlämmen;
d) Einstellung des Oberflächendrucks, wenn notwendig; e) Aufnehmen der überzogenen Partikeln;
f) Entfernen von Subphase-Überschuss, wenn notwendig.

11. Verfahren nach Anspruch 10, worin die Partikeln vor dem Verfahrensschritt c) in einem Gasfluss solähnlich aufgeschlemmt werden.

12. Verfahren nach Anspruch 10 oder 11, worin die Oberfläche der Partikeln, vor dem Verfahrensschritt c), mit einem angebrachten Reagensien, wie Silan, behandelt wird, um sie chemisch aktiv werden zu lassen.

13. Verfahren nach Anspruch 10 oder 11, worin vor dem Verfahrensschritt c) die Partikeloberfläche elektrostatisch aufgeladen wird.

14. Vorrichtung zur Durchführung des Verfahrens nach Anspruch 10 enthaltend:
a) eine Reaktionskammer für Partikeln, wobei die Kammer einen Eingang für einen Gasfluss, einen Eingang zum Einspritzen eines Aktivierungreazensen und gegebenfalls für Elektroden für eine elektrische Entladung, sowie einen Ausgang für ein Aërosol aus in einem Gasfluss aufgeschwämmten Partikeln aufweist;
b) einen Langmuir-Trug und
c) eine Aufnahmekammer, die mit dem Trug verbunden und zur Aufnahme von Partikeln angeordnet ist;
wobei der Ausgang der Reaktionskammer so angeordnet ist, dass er das Bestreuen der Oberfläche einer im Trug enthaltenen Subphase mit den Partikel gestattet.

## Revendications

1. Fine pellicule protéique uniforme comprenant une monocouche des molécules de protéine sur un substrat solide, les molécules de protéin ayant une disposition compacte ordiné grâce à la recrystallisation après le traitement thermique.

2. Fine pellicule protéique selon la revendication 1, dans laquelle la protéine est instable à l'interface eau/air ou est hydrosoluble.

3. Procédé pour la production d'une fine pellicule protéique uniforme comme défini dans la revendication 1 ou 2, qui comprend les phases suivantes:
a) formation d'une monocouch de la protéine sur le substrat solide;
b) chauffage de la pellicule sur le substrat à une température inférieure à la température de dénaturation de la proteîne
c) refroidissement de la pellicule sur le substrat; et
d) application facultative d'une ou plusieurs couche protéique et/ou application d'un ou plusieurs traitements de chauffages refroidissement.

4. Procédé selon la revendication 3, dans lequel le chauffage a lieu jusqu'à une température entre 25°C et 200°C.

5. Procédé selon la revendication 4, dans lequel le chauffage est faite jusqu'à une temperature établie pendant un'intervalle de temps convenable.

6. Procédé selon la revendication 4 ou 5, dans lequel le chauffage a lieu de température ambient et le refroidissement a lieu jusqu'à température ambient.

7. Procédé selon la revendication 3, dans lequel la monocouche est obtenue par effusion sur le substrat solid de mycélium comprenant les protéines selon la revendication 2.

8. Fine pellicule protéique uniforme comprenant une monocouche des molécules de protéine sur une particule de substract solide non planar, microsphères inclus.

9. Pellicule selon la revendication 8, dans laquelle le diamètre du particule est entre 10 nm et 1 mm.

10. Procédé pour la production d'une fine pellicule protéique selon les revendication 7, 8 ou 9, comprenant le phases suivantes:
a) formation d'une monocouche de protéine à la surface de subphase air/liquid d'une auge de Langmoir;
b) compression de la surface de la monocouche jusqu'à la pression établie;
c) effusion des particules de substrat solide non planar, comme des microparticules, sur la surface de la monocouche de protéine pour faire réagir les particules avec la monocouche de protéine de façon à laisser déposer une monocouche de protéine sur la surface des particules;
d) régulation de la pressione de surface, si nécessaire;
e) recueillement des particules recouvriés;
f) dépos d'excédent de subphase, si nécessaire.

11. Procédé selon la revendication 10, dans lequel le particule sont suspendues dans un flux de gaz en forme d'un aérosol, avant la phase c).

12. Procédé selon la revendication 10 ou 11, dans lequel la surface des particules est rendue chimiquement active par traitement avec un réactif convenable, comme silane, avant la phase c).

13. Procédé selon la revendication 10 ou 11, dans lequel la surface des particules est soumise à une charge électrostatique avant la phase c).

14. Appareil pour réaliser le procédé selon la revendication 10, comprenant:
a) une chambre de réaction pour les particles, la chambre ayant un entrée pour le flux de gaz, une entrée pour l'injection du réactif d'activation et pour des électrodes facultatives pour produir une décharge èlectrique, et une sortie pour un aérosol des particles suspendes dans un flux de gaz;
b) une auge de Langmuir; et
c) un chambre de ramassage jointe à l'auge et prévue pour ramassage des particules;
la sortie de la chambre de ramassage étant placée au regard de l'auge de façon à permettre l'effusion des particules sur la surface d'une subphase contenue dans l'auge.
